# EUROPEAN PATENT APPLICATION

(11) **EP 4 723 361 A1**
(43) Date of publication of application: **08.04.2026**
(21) Application number: 24854342.3
(22) Date of filing: 25.07.2024
(51) Int. Cl.: H01M 50/59, H01M 50/502, H01M 50/249

(54) **BUSBAR ASSEMBLY AND BATTERY PACK INCLUDING SAME**

(30) Priority: 14.08.2023 KR 20230106185
(71) Applicant: LG Energy Solution, Ltd., Seoul 07335 (KR)
(72) Inventor: HWANG, Sungtack, Daejeon 34122 (KR)
(74) Representative: Plasseraud IP
(86) International application number: PCT/KR2024/010823
(87) International publication number: WO 2025/037790

(57) **Abstract**

A busbar assembly according to one embodiment of the present disclosure comprises: a busbar; an insulating member that surrounds an outer surface of the busbar; and a foamed silicone part located between the outer surface of the busbar and the insulating member, wherein both end parts of the insulating member are spaced apart from each other, so that the foamed silicone part is exposed to the outside between the end parts of the insulating member.

## Description

### [TECHNICAL FIELD]

### CROSS-REFERENCE TO RELATED APPLICATIONS

The present application claims the benefit of and priority to Korean Patent Application No. 10-2023-0106185 filed on August 14, 2023 with the Korean Intellectual Property Office, the disclosures of each of which are incorporated herein by reference in their entireties for all purposes as if fully set forth herein.

### TECHNICAL FIELD

Aspects of the present disclosure relate to a busbar assembly and a battery pack including the same, and more particularly, to a busbar assembly which comprises a busbar, an insulating member that surrounds an outer surface of the busbar, and a foamed silicone part located between the outer surface of the busbar and the insulating member, and thus can prevent occurrence of arcing and/or electrical short-circuiting phenomena of the busbar and delay thermal propagation or thermal runaway time between adjacent battery modules, and a battery pack including the same.

### [BACKGROUND]

Secondary batteries, which are highly applicable to various products and exhibit superior electrical properties such as high energy density, or the like, are not only commonly used in portable devices, but also universally used in electric vehicles or hybrid electric vehicles and energy storage systems driven by electrical power sources. Such secondary batteries are gaining attention for their primary advantage of remarkably reducing the use of fossil fuels and not generating by-products from the use of energy, making them a new eco-friendly and energy efficient source of energy.

Currently commercialized secondary batteries include nickel cadmium batteries, nickel hydrogen batteries, nickel zinc batteries, lithium secondary batteries, and the like. Among them, lithium secondary batteries have come into the spotlight because of advantages, for example, of hardly exhibiting memory effects compared to nickel-based secondary batteries and thus being freely charged and discharged, and having very low self-discharge rate and high energy density.

Generally, lithium secondary batteries may be classified based on the shape of the exterior material into a cylindrical or prismatic secondary battery in which the electrode assembly is embedded in a metal can, and a pouch type secondary battery in which the electrode assembly is embedded in a pouch made of an aluminum laminate sheet.

Recently, along with the increasing need for a large-capacity secondary battery structure, including the utilization of the secondary battery as an energy storage source, there is a growing demand for a battery pack of middle- or large-sized module structure which is an assembly of battery modules in which a plurality of secondary batteries are connected in series or in parallel. Such a battery module has a structure in which a large number of battery cells are connected to each other in series or in parallel to form a battery cell stack, thereby improving capacity and output. In addition, the battery module may be mounted together with various control and protection systems such as BMS (battery management system) and a cooling system to form a battery pack.

In particular, a plurality of battery modules can be mounted inside the battery pack, and adjacent battery modules can be electrically connected to each other via a busbar. While the outer surface of the busbar generally has a structure protected by heat insulation and insulating materials, when an abnormal situation such as overcurrent, overheating, or thermal runaway occurs inside the battery pack, a problem can arise that the heat insulation and insulating materials may disappear, and the outer surface of the busbar is exposed to a high temperature environment.

When the outer surface of the busbar is exposed to the outside in this way, an arcing phenomenon may occur, so that a flame may be exposed to the outside of the battery pack. In addition, since the outer surface of the busbar exposed to the outside can come into contact with other electrical components inside the battery pack 1000, there is a high possibility that an electrical short-circuiting phenomenon can occur, and when an electrical short-circuiting phenomenon occurs, an electrical closed circuit is formed inside the battery pack, thereby accelerating a thermal runaway phenomenon inside the battery pack.

Therefore, there is an emerging need to develop a battery pack which can prevent the outer surface of the busbar from being directly exposed to a high temperature environment even if an abnormal situation occurs inside the battery pack, thereby preventing occurrence of arcing and/or electrical short-circuiting phenomena, and also can delay thermal propagation or thermal runaway time between adjacent battery modules.

The background description provided herein is for the purpose of generally presenting context of the disclosure. Unless otherwise indicated herein, the materials described in this section are not prior art to the claims in this application and are not admitted to be prior art, or suggestions of the prior art, by inclusion in this section.

### [DETAILED DESCRIPTION OF THE INVENTION]

### [Technical Problem]

It is an object according to embodiments of the present disclosure to provide a busbar assembly which comprises a busbar, an insulating member surrounding the outer surface of the busbar, and a foamed silicone part located between the outer surface of the busbar and the insulating member, and which thus can prevent occurrence of arcing and/or electrical short-circuiting phenomena of the busbar and delay thermal propagation or thermal runaway time between adjacent battery modules, and a battery pack including the same.

The technical objects of the present disclosure are not limited to the aforementioned objects, and other objects which are not mentioned herein should be clearly understood by those skilled in the art from the following detailed description and the accompanying drawing.

### [Technical Solution]

According to one embodiment of the present disclosure, a busbar assembly comprises: a busbar; an insulating member that surrounds an outer surface of the busbar, the insulating member having end parts; and a foamed silicone part located between the outer surface of the busbar and the insulating member, wherein both end parts of the insulating member are spaced apart from each other, so that the foamed silicone part is exposed to the outside between both end parts of the insulating member.

According to certain embodiments, the busbar may be a flexible busbar.

According to certain embodiments, in a high temperature environment, a foamed silicone expansion part may be formed in which the foamed silicone material contained in the foamed silicone part expands toward the outside of the busbar.

According to certain embodiments, both end parts of the insulating member may be extended along the longitudinal direction of the busbar and along one surface of the busbar.

According to certain embodiments, both end parts of the insulating member may be protruded toward the outside of the busbar.

According to certain embodiments, the foamed silicone expansion part may be formed along the direction in which both end parts of the insulating member protrude.

According to certain embodiments, the foamed silicone part may be formed in at least one of a tube type, a tape type, and a liquid silicone injection type.

According to certain embodiments, the insulating member may be made from a material having a thermal resistance temperature of 120 degrees Celsius or more and 150 degrees Celsius or less.

According to another embodiment of the present disclosure, a battery pack comprises: at least one busbar assembly mentioned above, and comprises a pack frame that houses a plurality of battery modules, wherein the busbar comprise end parts, wherein the busbar assembly electrically connects a pair of adjacent battery modules among the plurality of battery modules, and wherein both end parts of the busbar are exposed to the outside, and both end parts of the busbar are electrically connected to the pair of adjacent battery modules, respectively.

According to certain embodiments, the busbar assembly is located on an upper part of the pair of adjacent battery modules, and the busbar assembly may be arranged in a direction in which both end parts of the insulating member face a lower part of the pack frame.

According to certain embodiments, in a high temperature environment inside the pack frame, the foamed silicone part exposed between both end parts of the insulating member may expand in a direction toward the lower part of the pack frame.

According to certain embodiments, in the busbar assembly, both ends of the insulating member may extend between the pair of adjacent battery modules.

According to another embodiment of the present disclosure, a battery pack comprises: at least one busbar assembly mentioned above, and comprises a pack frame that houses at least one metal structure, wherein the busbar assembly extends between the metal structure and the pack frame, wherein the busbar assembly is arranged in a direction in which both end parts of the insulating member face the metal structure, and wherein the metal structure is at least one of a battery module, an electrical component, and a fixing member.

According to certain embodiments, in a high temperature environment inside the pack frame, the foamed silicone part exposed between the both end parts of the insulating member may expand in a direction toward the metal structure.

### [Advantageous Effects]

According to embodiments, a busbar assembly of the present disclosure and a battery pack including the same comprise a busbar, an insulating member surrounding the outer surface of the busbar, and a foamed silicone part located between the outer surface of the busbar and the insulating member, and thus can prevent occurrence of arcing and/or electrical short-circuiting phenomena of the busbar and delay thermal propagation or thermal runaway time between adjacent battery modules.

In addition, in the busbar assembly according to embodiments of the present disclosure and the battery pack including the same, the foamed silicone part can delay thermal propagation or thermal runaway time between adjacent battery modules.

Effects of the present disclosure are not limited to the effects mentioned above, and additional other effects not mentioned herein will be clearly understood by a person of ordinary skill in the art from the detailed description and the accompanying drawing.

### [BRIEF DESCRIPTION OF THE DRAWINGS]

FIG. 1 is a diagram showing one surface of a busbar assembly according to an embodiment of the present disclosure.
FIG. 2 is a diagram showing the other surface of the busbar assembly of FIG. 1.
FIG. 3 is a cross-sectional view of the busbar assembly of FIG. 1 cut along the a-a' axis in a normal environment.
FIG. 4 is a cross-sectional view of the busbar assembly of FIG. 1 cut along the a-a' axis in a high temperature environment.
FIG. 5 is a cross-sectional view of a battery pack in a normal environment according to another embodiment of the present disclosure, showing the busbar assembly of FIG. 1 arranged between adjacent battery modules.
FIG. 6 is a cross-sectional view showing the battery pack of FIG. 5 in a high temperature environment.
FIG. 7 is a cross-sectional view showing a part of a battery pack in a normal environment according to another embodiment of the present disclosure, which is a cross-sectional view showing the busbar assembly of FIG. 1 extending along between a metal structure and a pack frame.
FIG. 8 is a cross-sectional view showing the battery pack of FIG. 7 in a high temperature environment.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be practices in various different forms, and is not limited to the embodiments set forth herein.

In order to clearly describe the present disclosure, descriptions of parts unrelated to the description will be omitted, and same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

Further, throughout the description herein, when a portion is referred to as "including" or "comprising" a certain component, it means that the portion can further include other components, without excluding the other components, unless explicitly described to the contrary.

Further, throughout the description herein, the terms "in a plan view" indicate viewing an object from above, and the terms "in a cross-sectional view" indicate viewing a vertical cross section of an object from side.

Now, a busbar assembly 100 according to an embodiment of the present disclosure will be described.

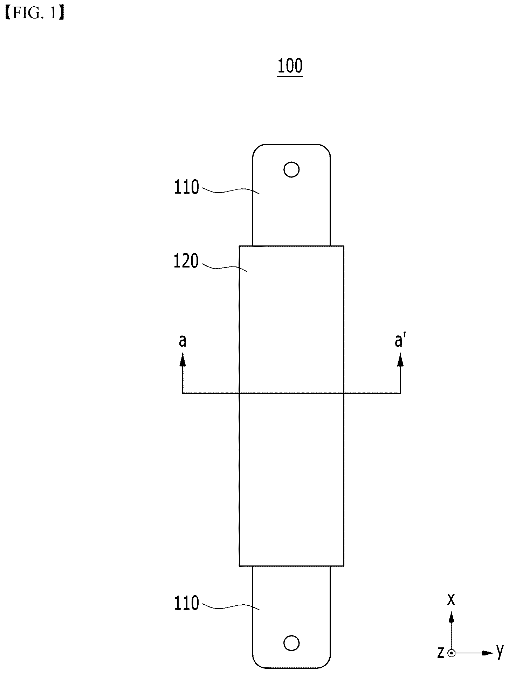

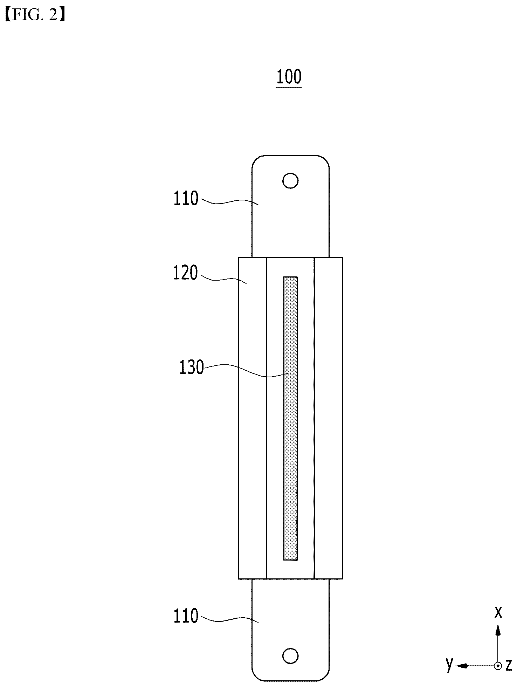

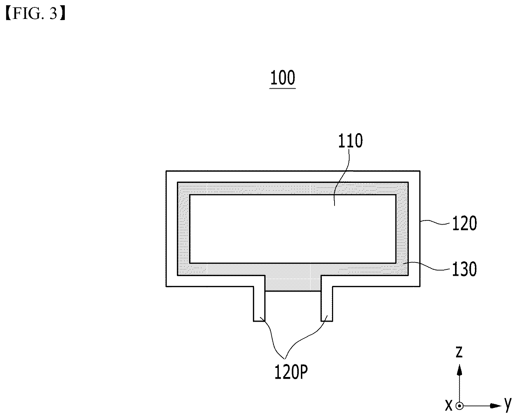

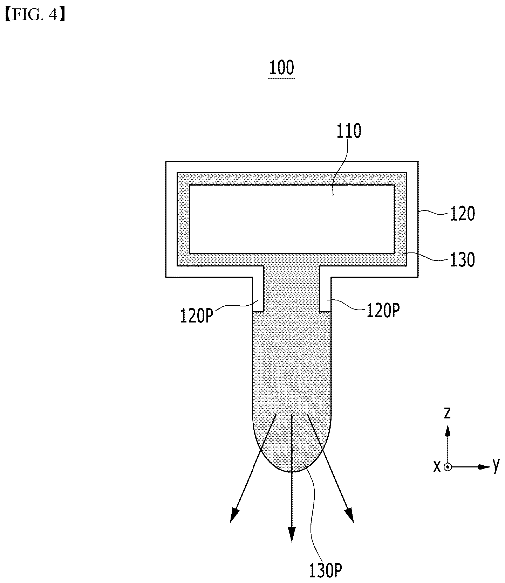

FIG. 1 is a diagram showing one surface of a busbar assembly according to an embodiment of the present disclosure. FIG. 2 is a diagram showing the other surface of the busbar assembly of FIG. 1. FIG. 3 is a cross-sectional view of the busbar assembly of FIG. 1 cut along the a-a' axis in a normal environment. FIG. 4 is a cross-sectional view of the busbar assembly of FIG. 1 cut along the a-a' axis in a high temperature environment.

Referring to FIGS. 1 to 3, a busbar assembly 100 according to an embodiment of the present disclosure comprises: a busbar 110, an insulating member 120 that surrounds an outer surface of the busbar 110, and a foamed silicone part 130 located between the outer surface of the busbar 110 and the insulating member 120.

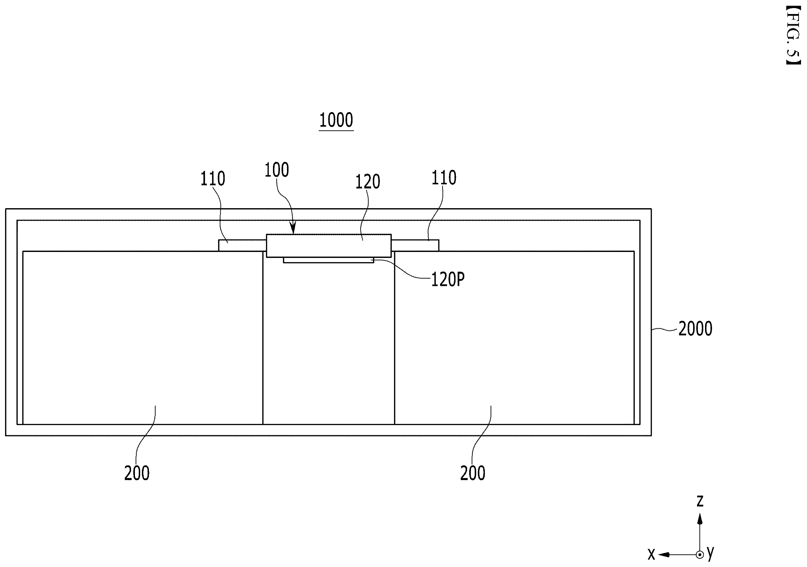

In the busbar assembly 100, both end parts of the busbar 110 may be exposed to the outside. In other words, both end parts of the busbar 110 may be electrically connected to internal components such as electrical components or battery modules housed inside the battery pack 1000 (FIG. 5). More specifically, according to certain embodiments, the busbar 110 is a flexible busbar, and may have a shape of which a part is bent along an empty space inside the battery pack 1000 (FIG. 5).

As an example, the busbar 110 may be a metal plate material such as copper (Cu). However, the material of the busbar 110 is not limited thereto, and any metal plate material having electrical conductivity may be applied to the present embodiment.

Therefore, in the busbar assembly 100 according to an embodiment of the present disclosure, the busbar 110 may electrically connect the battery modules to each other within a complex and narrow space between adjacent battery modules.

The insulating member 120 can surround the outer surface of the busbar 110. More specifically, according to certain embodiments, the insulating member 120 surrounds the outer surface of the busbar 110, and both end parts 120P of the insulating member 120 can be located on one surface of the busbar 110.

As an example, the insulating member 120 may be made from a material such as thermoplastic rubber, for example, Santoprene, TPV (Thermoplastic Vulcanizate). As another example, the insulating member 120 may be made from a material having a thermal resistance temperature of 120 degrees Celsius or more and 150 degrees Celsius or less.

Therefore, in the busbar assembly 100 according to an embodiment of the present disclosure, the insulating member 120 surrounds the outer surface of the busbar 110, and thereby can form an insulating structure of the busbar 110 from the external environment, and can primarily prevent an arcing phenomenon of the busbar 110 and/or an electrical short-circuiting phenomenon with other electrical components.

According to certain embodiments, the foamed silicone part 130 may be located on the outer surface of the busbar 110 and in between the outer surface of the busbar 110 and the insulating member 120. More specifically, the foamed silicone part 130 may surround the entire outer surface of the busbar 110, and the insulating member 120 may surround the outer surface of the busbar 110 that is surrounded by the foamed silicone part 130.

The foamed silicone part 130 may be formed in at least one of a tube type, a tape type, and a liquid silicone injection type. As an example, if the foamed silicone part 130 is formed in a tube type, the inside of the foamedd silicone part 130 has a hollow shape, and a busbar 110 may be inserted into the inside of the foamed silicone part 130. As another example, if the foamed silicone part 130 is formed in a tape type, a pair of foamed silicone parts 130 may be attached to each other with a busbar 110 interposed therebetween. As another example, if the foamed silicone part 130 is formed in a liquid silicone injection type, a liquid foamed silicone material may be injected and formed between the outer surface of the busbar 110 and the inner surface of the insulating member 120. However, the shape of the foamed silicone part 130 is not limited thereto, and any shape that can form the foamed silicone part 130 between the busbar 110 and the insulating material 120 can be applied to the present embodiment.

More specifically, when the foamed silicone part 130 is directly exposed to a high temperature environment such as flame, fire or the like, the foamed silicone material contained in the foamed silicone part 130 may be formed into ceramic. According to certain embodiments, The expanded silicone formed into ceramic can swell to about 4 to 5 times its original volume. In addition, according to certain embodiments, the foamed silicone formed into ceramic has a relatively very low hardness, so that even if the volume becomes relatively large, it may not damage other components inside the battery pack 1000 (FIG. 5).

As one example, the foamed silicone part 130 can be formed of a foamed silicone containing glass fiber. Here, the foamed silicone may mean a configuration in which a blowing agent is included in the silicone composition. However, the present disclosure is not limited thereto, and any material that can expand in a high temperature environment such as flame, fire or the like generated inside the battery pack 1000 (FIG. 5) may be applied to the present embodiment.

Therefore, the busbar assembly 100 according to an embodiment of the present disclosure includes a foamed silicone material that allows the foamed silicone part 130 to expand in a high temperature environment, so that the busbar assembly 100 can maintain an insulating structure even in a high temperature environment such as flame, fire, or the like. In particular, since the hardness of the foamed silicone material that has been expanded in the foamed silicone part 130 is relatively low, the busbar assembly 100 can maintain its insulating structure without damaging other components outside the busbar assembly 100.

In particular, according to certain embodiments, in a high temperature environment where phenomena such as overcurrent, overheating, thermal runaway or the like occur inside the battery pack 1000 (FIG. 5), the insulating member 120 may have a thermal resistance temperature of 120 degrees Celsius or more and 150 degrees Celsius or less as described above, so that the insulating member 120 may disappear in the high temperature environment.

Therefore, in the busbar assembly 100 according to an embodiment of the present disclosure, even if the insulating member 120 disappears in a high temperature environment, the foamed silicone part 130 surrounds the outer surface of the busbar 110, and thus, the busbar 110 can maintain an insulating structure between other components even in a high temperature environment such as flame, fire, or the like., and secondarily, can prevent the arcing phenomenon of the busbar 110 and/or the electrical short-circuiting phenomenon with other electrical components.

Referring to FIGS. 2 to 4, both end parts 120P of the insulating member 120 may be located apart from each other. In other words, in the busbar assembly 100, the foamed silicone part 130 may be exposed toward the outside between the two end parts 120P of the insulating member 120. That is, in the busbar assembly 100, the foamed silicone part 130 may be exposed toward the outside via a space where both end parts 120P of the insulating member 120 are apart from each other.

According to certain embodiments, in the busbar assembly 100, both end parts 120P of the insulating member 120 may extend along the longitudinal direction (x-axis direction) of the busbar 110 on one surface of the busbar 110. As an example, both end parts 120P of the insulating member 120 may extend linearly along the longitudinal direction of the busbar 110, as shown in FIG. 2. However, the present disclosure is not limited thereto, and both end parts 120P of the insulating member 120 may extend curvedly along the longitudinal direction of the busbar 110, unlike FIG. 2.

Referring to FIGS. 3 and 4, according to certain embodiments, the busbar assembly 100 may be exposed to a high temperature environment, and the foamed silicone part 130 that is exposed between both end parts 120P of the insulating member 120 may expand toward the outside. In other words, in a high temperature environment, a foamed silicone expansion part 130P may be formed in which the foamed silicone material contained in the foamed silicone part 130 expands toward the outside of the busbar 110.

More specifically, according to certain embodiments, both end parts 120P of the insulating member 120 may protrude toward the outside of the busbar 110. In this case, in a high temperature environment, the foamed silicone part 130 that is exposed between both end parts 120P of the insulating member 120 may expand along the direction in which both end parts 120P of the insulating member 120 protrude. That is, the foamed silicone expansion part 130P may be formed along the direction in which both end parts 120P of the insulating member 120 protrude.

Therefore, in the busbar assembly 100 according to an embodiment of the present disclosure, both end parts 120P of the insulating member 120 can guide the expansion direction of the foamed silicone part 130 in a high temperature environment. According to certain embodiments, considering the thermal resistance temperature of the insulating member 120, both end parts 120P of the insulating member 120 can primarily guide the expansion direction of the foamed silicone part 130 and may then disappear due to heat.

As an example, in a high temperature environment, the foamed silicone expansion part 130P of the busbar assembly 100 can be located at a position to prevent electrical contact between components inside the battery pack 1000 (FIG. 5), so that the insulation distance between components inside the battery pack 1000 (FIG. 5) can be maintained.

As another example, in a high temperature environment, the foamed silicon expansion part 130P of the busbar assembly 100 can be arranged at a position to physically block overcurrent, overheating, thermal runaway phenomena, or the like generated inside the battery pack 1000 (FIG. 5) from being propagated to other components, thereby preventing or delaying thermal propagation or additional thermal runaway phenomenon inside the battery pack 1000 (FIG. 5).

Next, battery packs 1000 and 1001 according to another embodiment of the present disclosure will be described.

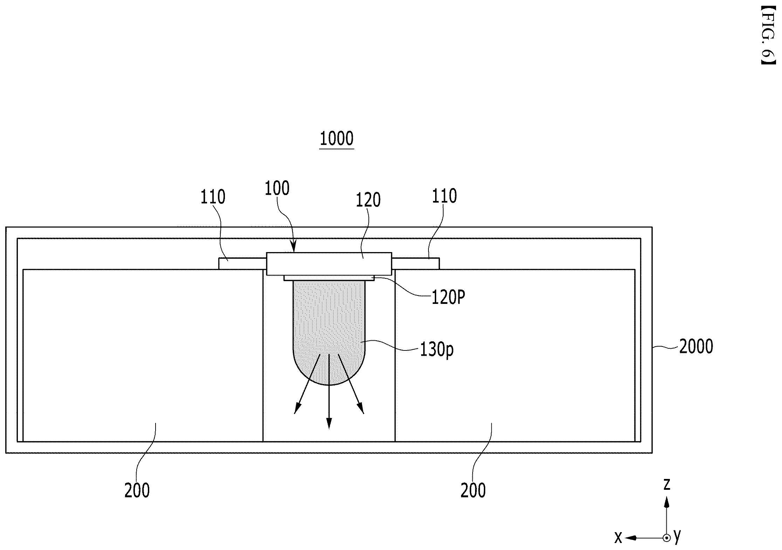

FIG. 5 is a cross-sectional view of a battery pack in a normal environment according to another embodiment of the present disclosure, showing the busbar assembly of FIG. 1 arranged between adjacent battery modules. FIG. 6 is a cross-sectional view showing the battery pack of FIG. 5 in a high temperature environment.

Referring to FIGS. 5 and 6, a battery pack 1000 according to another embodiment of the present disclosure is a battery pack 1000 including at least one busbar assembly 100, and includes a pack frame 2000 that houses a plurality of battery modules 200.

According to certain embodiments, the pack frame 2000 may include a lower pack frame (not shown) on which a plurality of battery modules 200 are mounted and an upper pack frame (not shown) located on the upper part of the battery modules 200. More specifically, the upper pack frame may cover the upper part of the lower pack frame while the plurality of battery modules 200 are mounted on the lower pack frame. Here, the lower pack frame and the upper pack frame may be coupled to each other by a method such as welding or bonding to seal the inside of the battery pack 1000.

As an example, the pack frame 2000 may be made from a heat insulating material. For example, the pack frame 2000 may be composed of an aluminum extrusion structure. As another example, the pack frame 2000 may be composed of a dissimilar metal bonding material such as clad metal, or may be a structure including a heat insulating material such as aerogel or EPP (expanded polypropylenes) foam. As another example, the pack frame 2000 may be a structure including a material such as silicon foam, mica, or glass fiber pad. However, the present disclosure is not limited thereto, and the pack frame 2000 can be used without limitation as long as it is made of a heat insulating material having a predetermined stiffness.

According to certain embodiments, the battery module 200 includes a battery cell stack (not shown) in which a plurality of battery cells are stacked, and a module frame (not shown) that houses the battery cell stack (not shown).

The battery cell is preferably a pouch-type battery cell. As an example, the battery cell may be produced by housing the electrode assembly in a pouch case of a laminate sheet including a resin layer and an inner layer, and then heat-sealing a sealing part of the pouch case. The battery cell may be formed in a rectangular sheet-like structure. The battery cells may be configured by a plurality of numbers, and the plurality of battery cells are stacked so as to be electrically connected to each other, thereby forming a battery cell stack. Here, the number of battery cells constituting the battery cell stack (not shown) may be adjusted according to circumstances.

The module frame (not shown) may include an upper cover and a U-shaped frame. According to certain embodiments, the U-shaped frame may include a bottom part and two side surface parts extending upward from both end parts of the bottom part. According to certain embodiments, the bottom part may cover the lower surface of the battery cell stack (not shown), and the side surface part may cover the side surface of the battery cell stack (not shown). The upper cover and the U-shaped frame may be coupled by welding or the like in a state where the corresponding corner parts are in contact with each other, thereby forming a structure that covers the upper, lower, left, and right surfaces of the battery cell stack (not shown). For this purpose, according to certain embodiments, the upper cover and the U-shaped frame may be made from a metal material having a predetermined strength.

However, the structure of the module frame (not shown) is not limited thereto, and in another embodiment, the module frame (not shown) may have a mono frame structure. According to certain embodiments, the mono frame may be in the form of a metal plate material in which the upper surface, lower surface, and both side surfaces are integrated. The mono frame may be produced by extrusion molding. In addition, the structure of the module frame (not shown) may be provided as an L-shaped frame structure in addition to a mono frame or a U-shaped frame, and may be provided in various structures not described in the above-mentioned examples.

In addition, according to certain embodiments, the battery module 200 further includes a busbar frame located on the front and rear surfaces of the battery cell stack (not shown), and an end plate covering the busbar frame. Here, a busbar (not shown) electrically connected to the battery cell stack (not shown) may be located on the busbar frame (not shown). Thereby, the end plate may physically protect the battery cell stack (not shown) and other electrical components from external impact.

Referring to FIG. 5, the busbar assembly 100 can be electrically connected between a pair of adjacent battery modules 200 among a plurality of battery modules 200. More specifically, according to certain embodiments, in the busbar assembly 100, both end parts of the busbar 110 are exposed to the outside, and both end parts of the busbar 110 can be electrically connected to the pair of adjacent battery modules 100, respectively.

Therefore, in the battery pack 1000 according to another embodiment of the present embodiment, the above-mentioned busbar assembly 100 may electrically connect a pair of adjacent battery modules 200 to each other, thereby preventing the busbar 110 from being exposed to the outside in a high temperature environment inside the battery pack 1000. In addition, the battery pack 1000 according to the present embodiment may prevent the busbar 110 from being exposed to the outside in a high temperature environment inside the battery pack 1000, thereby preventing flame exposure and thermal propagation speed from being accelerated to the outside of the battery pack 1000 due to an arcing phenomenon of the busbar 110 and/or an electrical short-circuiting phenomenon with other electrical components.

According to certain embodiments, the busbar assembly 100 may be located on the upper part of a pair of adjacent battery modules 200. According to certain embodiments, in the busbar assembly 100, both end parts 120P of the insulating member 120 may be arranged in the direction (-z-axis direction) toward the lower part of the pack frame 2000. More specifically, according to certain embodiments, in the busbar assembly 100, both end parts of the insulating member 120 may extend along between the pair of adjacent battery modules 200.

According to certain embodiments, in a high temperature environment inside the pack frame 2000, the foamed silicone part 130 exposed between both end parts 120P of the insulating member 120 can expand in a direction (-z-axis direction) toward the lower part of the pack frame 2000 as shown in FIG. 6. More specifically, the foamed silicone expansion part 130P can be formed by the foam so that a silicone material contained in the foamed silicone part 130 expands in a direction toward the lower part of the pack frame 2000. According to certain embodiments, the foamed silicone expansion part 130P can extend along between pairs of adjacent battery modules 200.

According to certain embodiments, the high temperature environment inside the pack frame 2000 may be an environment in which the temperature inside the pack frame 2000 is increased due to phenomena such as overcurrent, overheating, and thermal runaway of the plurality of battery modules 200 mounted together inside the battery pack 1000 (FIG. 3). More specifically, the high temperature environment inside the pack frame 2000 may mean an environment in which a fire occurs through a cell event such as thermal runaway in a battery cell located inside the battery pack 1000, and some of the internal components of the pack frame 2000 are exposed to flames. As an example, the high temperature environment inside the pack frame 2000 may be an environment in which some of the internal components of the pack frame 2000 are heated to a temperature at which they can disappear by flames. In other words, the high temperature environment inside the pack frame 2000 may mean an ultra-high temperature environment in which the temperature has risen sharply to a temperature exceeding 1200 degrees Celsius.

Therefore, according to another embodiment of the present disclosure, the battery pack 1000 is formed between a pair of adjacent battery modules 200 in a high temperature environment inside the pack frame 2000 so that the foamed silicon expansion part 130P of the busbar assembly 100 can maintain an insulation distance between the pair of battery modules 200 or between the battery module 200 and other components.

In addition, according to certain embodiments, in a high temperature environment, the foamed silicon expansion part 130P of the busbar assembly 100 may be formed between a pair of adjacent battery modules 200, thereby physically blocking phenomena such as overcurrent, overheating, and thermal runaway occurring inside the battery pack 1000 from propagating between adjacent battery modules 200, and preventing or delaying thermal propagation or additional thermal runaway phenomena inside the battery pack 1000.

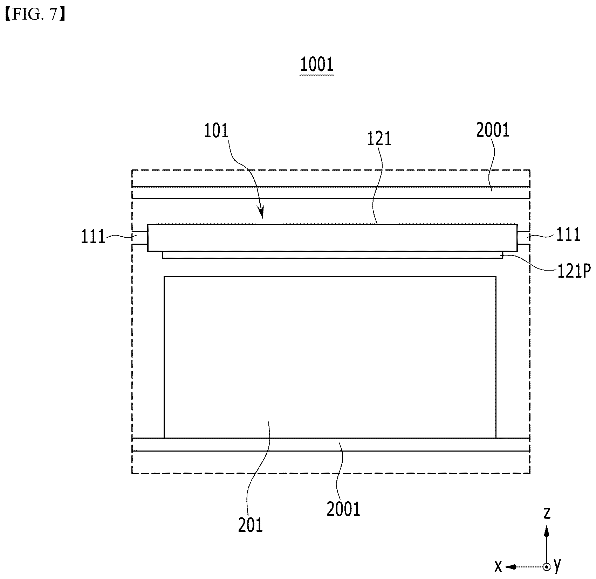

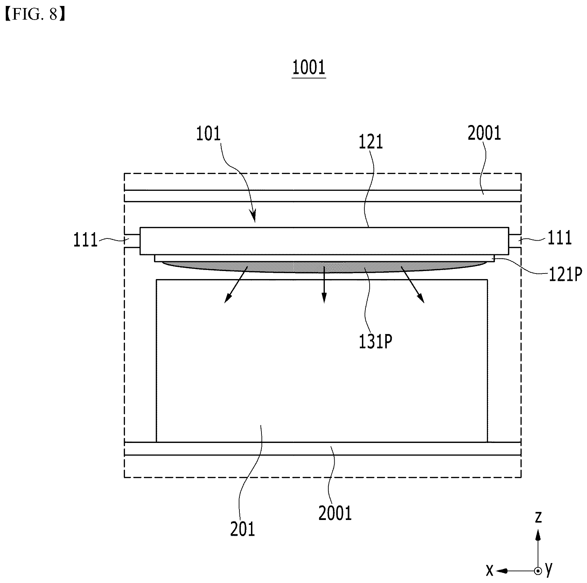

FIG. 7 is a cross-sectional view showing a part of a battery pack in a normal environment according to another embodiment of the present disclosure, which is a cross-sectional view showing the busbar assembly of FIG. 1 extending along between a metal structure and a pack frame. FIG. 8 is a cross-sectional view showing the battery pack of FIG. 7 in a high temperature environment.

Referring to FIGS. 7 and 8, a battery pack 1001 according to another embodiment of the present disclosure is a battery pack 1001 including at least one busbar assembly 101, and includes a pack frame 2001 that houses at least one metal structure 301. According to certain embodiments, the pack frame 2001 may be described in the same manner as the pack frame 2000 described in FIGS. 5 and 6.

The metal structure 301 may be at least one of a battery module, an electrical component, and a fixing member. According to certain embodiments, the battery module may be described in the same manner as the battery module 200 described in FIGS. 5 and 6. In addition, the electrical component may be a component for electrical connection between components inside the battery pack 1000, and the fixing member may be a component that fixes components inside the battery pack 1000 to each other or fixes to the pack frame 2001.

According to certain embodiments, the busbar assembly 101 can be described in the same manner as the busbar assembly 100 described in FIGS. 1 to 4, and only the parts that are different from the busbar assembly 100 described in FIGS. 5 and 6 will be described below.

The busbar assembly 101 can be extended along between the metal structure 301 and the pack frame 2001. More specifically, the busbar assembly 101 can be arranged in a direction in which both end parts 121P of the insulating member 121 face the metal structure 301. According to certain embodiments, the foamed silicone expansion part 130P can be extended along the outer surface of the metal structure 301.

In a high temperature environment inside the pack frame 2001, the foamed silicone part (not shown) exposed between both end parts 121P of the insulating member 121 can expand in a direction toward the metal structure 301. More specifically, the foamed silicone expansion part 131P can expand the expanded silicone material contained in the foamed silicone part (not shown) in a direction toward the metal structure 301.

Therefore, in the battery pack 1001 according to another embodiment of the present disclosure, in a high temperature environment inside the pack frame 2001, the foamed silicone expansion part 131P of the busbar assembly 101 is formed on the outer surface of the metal structure 301, thereby maintaining an insulation distance between the busbar assembly 101 and the metal structure 301.

In addition, even if a part of the structure of the insulating member 121 or the metal structure 301 disappear due to phenomena such as overcurrent, overheating, and thermal runaway occurring inside the battery pack 1000, according to certain embodiments it is possible to maintain an insulation distance between the busbar assembly 101 and the metal structure 301.

The above-mentioned battery pack can be used in various devices. Such a device can be used in a vehicle such as an electric bicycle, an electric vehicle, or a hybrid vehicle, but the present disclosure is not limited thereto, and is applicable to various devices that can use a battery module and a battery pack comprising the same, which is also falls under the scope of the present disclosure.

Although the disclosure has been described in detail above with reference to preferred embodiments thereof, it will be appreciated by those skilled in the art that the scope of the present disclosure is not limited thereto, and various modifications and improvements can be made in these embodiment without departing from the principles and sprit of the invention, the scope of which is defined in the appended claims and their equivalents.

### Description of Symbols

100, 101: busbar assembly
110, 111: busbar
120, 121: insulating member
120P, 121P: both end parts of insulating member
130, 131: foamed silicone part
131P: foamed silicone expansion part
200: battery module
301: metal structure
1000, 1001: battery pack
2000, 2001: pack frame

## Claims

1. A busbar assembly comprising:
a busbar;
an insulating member that surrounds an outer surface of the busbar, the insulating member having end parts; and
a foamed silicone part located between the outer surface of the busbar and the insulating member,
wherein both end parts of the insulating member are spaced apart from each other, so that the foamed silicone part is exposed to the outside between the end parts of the insulating member.

2. The busbar assembly of claim 1, wherein:
the busbar is a flexible busbar.

3. The busbar assembly of claim 1, wherein:
in a high temperature environment, the foamed silicone part exposed between the two end parts of the insulating member expands toward the outside.

4. The busbar assembly of claim 3, wherein:
in a high temperature environment, a foamed silicone expansion part is formed in which the foamed silicone material contained in the foamed silicone part expands toward the outside of the busbar.

5. The busbar assembly of claim 4, wherein:
the end parts of the insulating member extend along the longitudinal direction of the busbar and along one surface of the busbar.

6. The busbar assembly of claim 4, wherein:
the end parts of the insulating member protrude toward the outside of the busbar.

7. The busbar assembly of claim 5, wherein:
the foamed silicone expansion part is formed along the direction in which both end parts of the insulating member protrude.

8. The busbar assembly of claim 1, wherein:
the foamed silicone part is formed in at least one of a tube type, a tape type, and a liquid silicone injection type.

9. The busbar assembly of claim 1, wherein:
the insulating member is made from a material having a thermal resistance temperature of 120 degrees Celsius or more and 150 degrees Celsius or less.

10. A battery pack comprising at least one busbar assembly of claim 1,
wherein the busbar comprises end parts,
wherein the battery pack comprises a pack frame that houses a plurality of battery modules,
wherein the busbar assembly electrically connects a pair of adjacent battery modules among the plurality of battery modules, and
wherein both end parts of the busbar are exposed to the outside, and both end parts of the busbar are electrically connected to the pair of adjacent battery modules, respectively.

11. The battery pack of claim 10, wherein:
the busbar assembly is located on an upper part of the pair of adjacent battery modules, and
the busbar assembly is arranged in a direction in which both end parts of the insulating member face a lower part of the pack frame.

12. The battery pack of claim 11, wherein:
in a high temperature environment inside the pack frame, the foamed silicone part exposed between both end parts of the insulating member expands in a direction toward the lower part of the pack frame.

13. The battery pack of claim 12, wherein:
in the busbar assembly, both ends of the insulating member extend between the pair of adjacent battery modules.

14. A battery pack comprising at least one busbar assembly of claim 1,
wherein the battery pack comprises a pack frame that houses at least one metal structure,
wherein the busbar assembly extends between the metal structure and the pack frame,
wherein the busbar assembly is arranged in a direction in which both end parts of the insulating member face the metal structure, and
wherein the metal structure is at least one of a battery module, an electrical component, and a fixing member.

15. The battery pack of claim 14, wherein:
in a high temperature environment inside the pack frame, the foamed silicone part exposed between both end parts of the insulating member expands in a direction toward the metal structure.
